# EUROPEAN PATENT SPECIFICATION

(11) **EP 2 972 201 B1**
(45) Date of publication and mention of the grant of the patent: **08.01.2020**
(21) Application number: 14762234.4
(22) Date of filing: 14.03.2014
(51) Int. Cl.: G01N 15/10, G01N 15/14, G01N 21/01, G06T 7/73

(54) **IMAGE RECOGNITION BASE ABLATION PATTERN POSITION RECALL**
POSITIONSNEUAUFRUF MIT ABLEITUNGSMUSTER FÜR EINE BILDERKENNUNG
RAPPEL DE POSITION DE MOTIF D'ABLATION DE BASE À RECONNAISSANCE D'IMAGE

(30) Priority: 15.03.2013 US 201361792016 P
(43) Date of publication of application: 20.01.2016
(73) Proprietor: Elemental Scientific Lasers, LLC, Omaha, NE 68127 (US)
(72) Inventor: SUMMERFIELD, Leif, Christian, Bozeman, MT 59718 (US)
(74) Representative: HGF Limited
(86) International application number: PCT/US2014/028241
(87) International publication number: WO 2014/144012

(56) References cited:
- US-A- 5 523 543
- US-A- 5 844 149
- US-A1- 2007 012 665
- US-A1- 2009 073 586
- US-A1- 2009 273 782
- US-A1- 2009 273 782
- US-A1- 2011 198 496
- BARRETT S F ET AL: "DIGITAL TRACKING AND CONTROL OF RETINAL IMAGES", OPTICAL ENGINEERING, SOC. OF PHOTO-OPTICAL INSTRUMENTATION ENGINEERS, BELLINGHAM, vol. 33, no. 1, 1 January 1994 (1994-01-01), pages 150-159, XP000421276, ISSN: 0091-3286, DOI: 10.1117/12.149134
- DOIGNON C ET AL: "Autonomous 3-d positioning of surgical instruments in robotized laparoscopic surgery using visual servoing", IEEE TRANSACTIONS ON ROBOTICS AND AUTOMATION, IEEE INC, NEW YORK, US, vol. 19, no. 5, 1 October 2003 (2003-10-01), pages 842-853, XP011102058, ISSN: 1042-296X, DOI: 10.1109/TRA.2003.817086
- WANNER ET AL.: 'Laser ablation inductively coupled plasma mass spectrometry (LA-ICP-MS) for spatially resolved trace element determination of solids using an autofocus system' SPECTROCHIMICA ACTA PART B: ATOMIC SPECTROSCOPY vol. 54, no. 2, 01 February 1999, pages 289 - 298, XP055288787 DOI: 10.1016/S0584-8547(98)00245-6

## Description

### Background of the Invention

Analysis systems, such as mass spectrometry (MS) systems, optical emission spectrometry (OES) systems and the like, can be used to analyze the composition of a target material, for example a solid crystal. Often, a sample of the target is provided to analysis systems of this type in the form of an aerosol. The aerosol is typically produced by arranging the target material in a sample chamber, introducing a flow of a carrier gas within the sample chamber, and ejecting a portion of the target in the form of particles. The ejecting may be done for example by laser ablating a portion of the target with one or more laser pulses, from a laser, to generate a plume containing particles and/or vapor ejected or otherwise generated from the target suspended within the carrier gas. Thereafter, the ejected particles are typically entrained by the flowing carrier gas and transported to an analysis system via a sample transport conduit. These analysis systems perform applications including Laser ablation Inductively Coupled Plasma Mass Spectrometry (LA-ICP-MS) and Laser ablation Inductively Coupled Plasma Optical Emission Spectrometry (LA-ICP-OES)

Analytical laser ablation applications require repeated movement of an XY, or XYZ, positioning system during experimental runs performed subsequently to a scan placement process in which movements to be repeated during the experimental run are set. One exemplary use of analytical laser ablation systems is for zircon crystal grain dating. Zircon crystals incorporate uranium and thorium atoms into the crystalline structure, and strongly reject lead during the formation of the crystal. Therefore, any lead present in a zircon crystal is assumed to be from radioactive decay. Therefore, if the composition of a zircon crystal is determined the age of the crystal can be determined by calculating the amount of time it would take to produce the ratio of uranium to lead in the crystal through radioactive decay.

Zircon crystal grains used for dating frequently have very small dimensions, for example a single grain may range in size from 20um across to 200um across points in an outline of the crystal grain. Within the crystals invisible structures may exist that can be imaged using an SEM, XRF or other similar tool. These invisible structures may cause areas of a crystal grain to be not ideal for certain analytical laser ablation applications. For these reasons a desired target on a zircon crystal grain for zircon crystal dating, and similar applications, may be a very small and thus these applications require very high precision for ablating a surface of a crystal grain, and therefore require high precision stage movement.

During a typical zircon crystal grain aging application an exemplary sample slide may be prepared containing approximately 20-200+ grains in an approximately 50mm by 50mm area. The grains may be placed on the slide automatically or by a user. The grains may be placed in a random arrangement or in an orderly pattern, such as in rows and columns. Further, the grains may be placed according to sets of crystal grains to be analyzed together. After placement the grains may be machined to have flat surfaces substantially on the same plane as the other grains on the sample slide.

After the sample slide is prepared it is loaded into a sample chamber of an analytical laser ablation device and a scan placement process is performed. An operator places a pattern scan, also referred to as an overlay, on the sample slide. This may be done with using software to perform a virtual overlay of pattern shapes. During this process the locations of a series of scans or holes to be fired upon by the laser are set in precise positions, for example at specific locations on the machined faces of individual crystal grains. These set positions are referred to as intended laser locations. Once the scan placement process is complete an experimental run occurs where a motion control system executes a series of movements determined by the scan placement process to ablate each crystal grain at the intended laser locations at a desired time and sequence.

As part of the experimental setup a reference material blank is usually placed in the sample chamber of a laser ablation apparatus, such as off to one side of the main experiment area. The reference blank has a known composition. The system may be set to analyze sets of zircon crystals grains and between sets of zircon crystal grains the system will then be programmed to sample the reference blank material. In this way, analytical drifts measured at an ICP-MS for example can be corrected for given the reference's known and repeatable concentrations of material.

During the scan placement process a list of intended laser locations are saved as XY, or XYZ, stage coordinates. During the experimental run, for each intended laser location the sample is moved relative to the laser by the motion control system according to the saved coordinate position.

During an experimental run a motion control system will move the sample slide relative to the laser for each incrementally setup intended laser location on a zircon crystal grain in a set in the sample and then to the reference blank, then back to the next set of crystal grains. With each large movement either between crystal grains with intended laser locations, or to the reference blank a bi-directional repeatability error may appear to shift the sample slide relative to the laser beam's position. A large 30mm move can incur a built up bi-directional repeatabilty or accuracy error that will shift the laser focus position off of the intented laser position on a crystal grain. The precision with which the ablation pattern was placed relative to the sample will be reduced by the time the laser is to be fired if a repeatability error accumulates. In some cases the laser will fire in an unintended location, including missing the crystal grain with an intended laser location thereon altogether. This is undesirable since a laser firing at an unintended location will skew or ruin the data for that experiment pass.

Due to the large number of zircon crystals often sampled during the same experimental run, such as 20 to 200+crystal grains, it is undesirably time consuming for an operator to monitor the equipment and correct for poor system level accuracy of the laser beam on the sample during the experimental run.

Conventional techniques for XYZ positioning systems include motion control topologies, such as open loop and closed loop. Open loop designs may be stepper motor based, and move the stage via linear type motors or lead-screw drive type mechanisms a precise amount, for example a fraction of the actual full step range. Each step can be on the order of 1-2um of XY movement, with microstepping adding a divide by 2,4,8,16 or 32 microsteps per full step. In this way it is possible to attempt positioning at a very high resolution, only limited by the mechanical coupling of the stage mechanism. Closed loop adds to this a feedback mechanism and a controller topology that attempts to reduce requested position-actual position error until the error is zero or very small. These solutions have the disadvantage of requiring costlier stages and controllers and are complicated to implement. US 2009273782 A1 discloses a laser ablation spectroscopy apparatus and method using a pulse laser to generate a plasma plume during a laser ablation process. US 2011198496 A1 discloses an imaging mass spectrometer which uses an ion source for ionizing a sample. The publication "Digital tracking and control of retinal images", Barrett S. F. et al, Optical engineering, instrumentation engineers, vol. 33, no. 1, 1994, pp. 150-159, discloses a system for the digital tracking and control of retinal images. The publication "Autonomous 3-D positioning of surfical instruments in robotized laparoscopic surgery using visual servoing", Doignon C. et al, IEEE Transactions on robotics and automation, vol. 19, no. 5, 2003, pp. 842-853, discloses a robotic vision system that automatically retrieves and positions surgical instruments during robotized laparoscopic surgical operations.

### Brief Summary of the invention

Embodiments of the present invention exemplarily described herein relate generally to saving XYZ stage coordinates for intended laser locations as well as a kernel image of an ablation pattern placed during a scan placement process, and comparing the kernel image to a current image of the current field of view of a camera/microscope that includes the location a laser would be fired at. This comparison is used during an experimental run to correct for any built up error. More particularly, embodiments of the present invention relate to apparatuses and methods for software based image recognition to correct errors in open looped systems for positioning a sample relative to a laser in analysis systems for zircon crystal grain dating.

### Brief Description of the drawings

Fig. 1 is a cross sectional view of a laser ablation apparatus.
Fig. 2 illustrates a sample slide containing zircon crystal grains.
Fig. 3 is a flow chart diagram.
Figs. 4a-c illustrate the field of view of a camera/microscope during the scan placement and experimental run steps.

### Detailed description of the invention

The following description of the invention will typically be with reference to specific structural embodiments and methods. It is to be understood that there is no intention to limit the invention to the specifically disclosed embodiments and methods but that the invention may be practiced using other features, elements, methods and embodiments. Preferred embodiments are described to illustrate the present invention, not to limit its scope, which is defined by the claims. Those of ordinary skill in the art will recognize a variety of equivalent variations on the description that follows. Like elements in various embodiments are commonly referred to with like reference numerals.

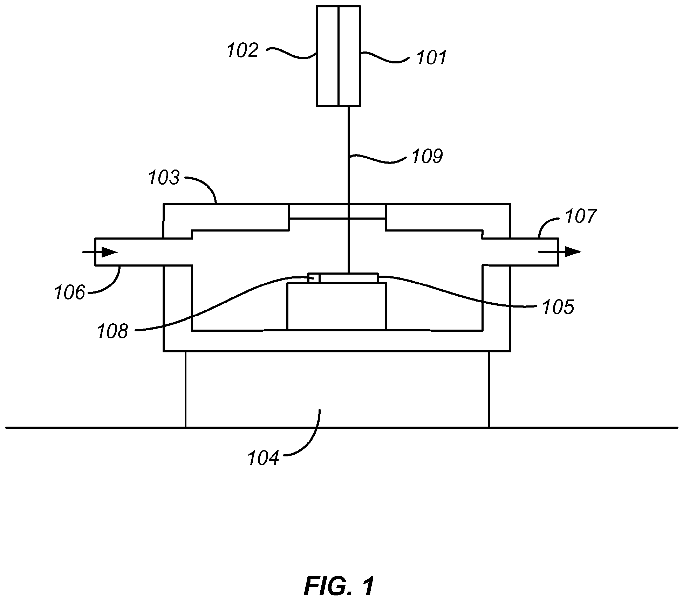

FIG. 1 illustrates a cross sectional view of a laser ablation apparatus **100.** Laser ablation apparatus **100** includes a laser **101,** a camera/microscope **102** fixed relative to the laser **101,** a sample chamber **103,** and a motion control system **104** which controls movements of the sample chamber **103** relative to the laser **101** and camera/microscope **102.** To begin analysis a sample slide **105** is placed within the sample chamber **103.** The sample chamber includes an inlet conduit **106** to allow in a flow of carrier gas and a sample transport conduit **107** to allow the exit of carrier gas. Within the sample chamber **103** is a reference blank **108** which may be separate or integral with the sample slide **105.**

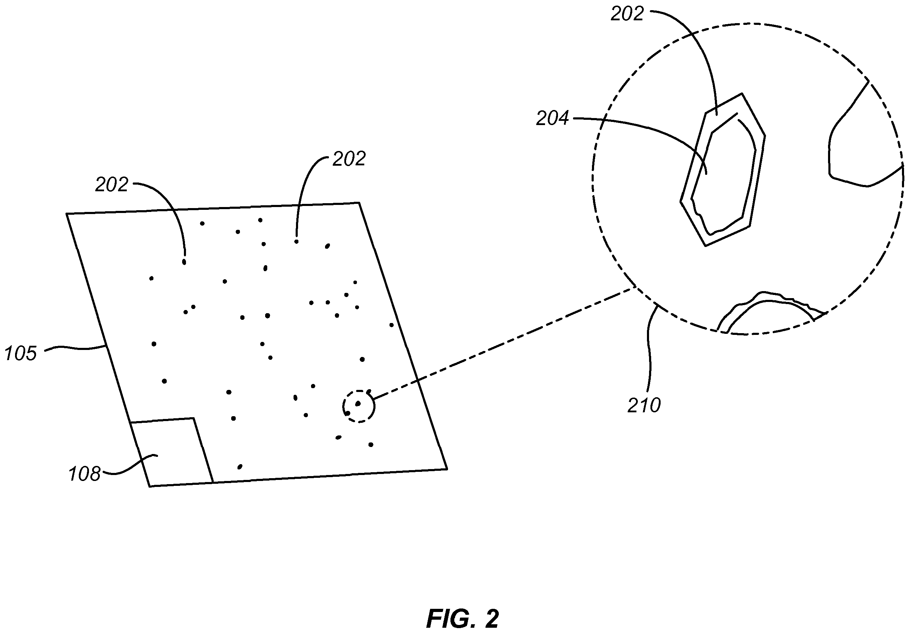

Fig. 2 illustrates a sample slide **105** and a zoomed in view **201** of a portion of the surface of the slide. On the surface of the sample slide **105** there is a plurality of zircon crystal grains **202.** In embodiments each crystal is machined to have a flat surface **204.**

Embodiments of the invention include software based image recognition to correct errors that tend to shift the sample relative to the laser beams during an experimental run. In embodiments, this is done by precisely moving a stage of a motion control system to the intended laser location of an ablation pattern set during a scan placement process. This precise movement is accomplished by comparing images saved during the scan placement process as kernel image with current position images of the camera/microscope field of view and calculating corrective moves.

In embodiments the xyz position in combination with a kernel image will ensure the laser fires precisely at the intended laser locations that were set during the scan placement process by correcting for any movement error incurred when returning to an intended laser position that was set during the scan placement process. In embodiments movement error is less than half the field of view of the camera/microscope , for example 350um, ensuring that the intended laser location is close enough to appear in the field of view of the camera/microscope view during the experimental run. This current camera/microscope view is then used to compare against the saved kernel image location, and an XY, or XYZ, offset move can be applied to correct for the error.

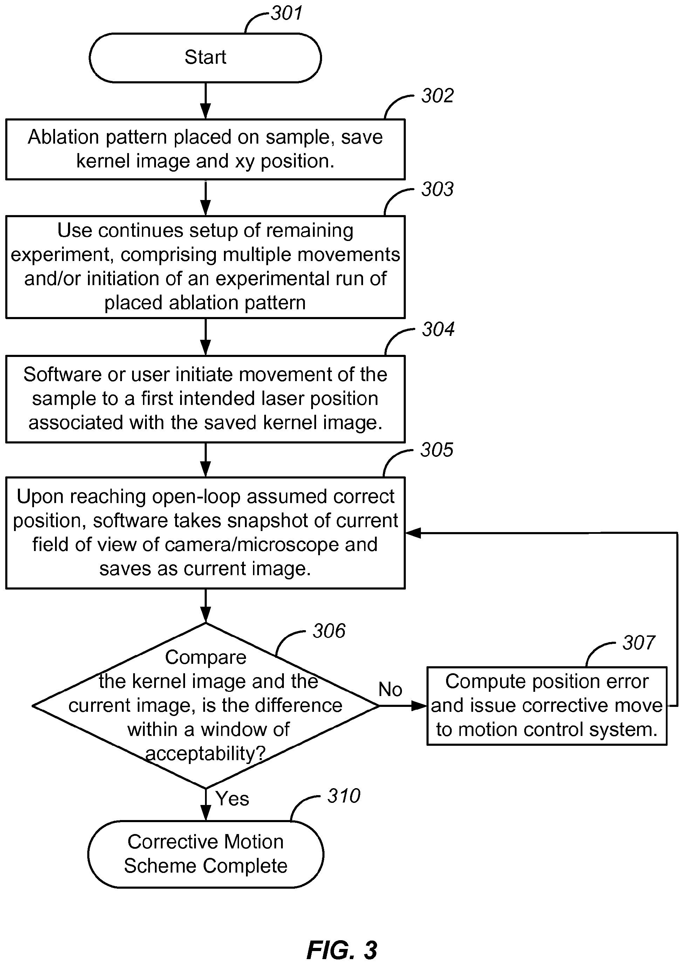

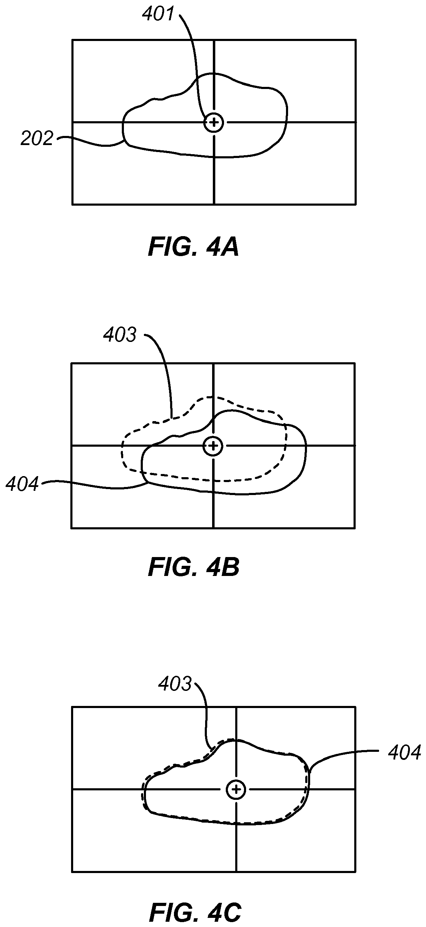

Fig. 3 is a flow chart diagram of an embodiment. In the embodiment, the process begins **301** and an ablation pattern is placed onto a sample in a first step **302,** for example using software to perform a virtual overlay of pattern shapes. The virtual overlay software using the field of view of the camera/microscope **102** allows a user to view a portion of the sample slide containing a crystal grain **202** and set an intended laser position for a location on a crystal grain. The virtual overlay software further allows a user to set the intended laser positions on a plurality of crystal grains **202** on the sample slide **105** forming an ablation pattern. An embodiment of setting an intended laser location on a crystal grain is illustrated in Fig. 4A showing a field of view of the camera/microscope **102** with crosshairs and a spot representing an intended laser location **401** for a laser to be fired onto a zircon crystal grain **202** located in the field of view. During this step of placing the ablation pattern information about the ablation pattern is saved. In embodiments this information includes XY, or XYZ, positions. In embodiments firing information and movement properties are saved. In embodiments an image of a camera/microscope field of view at the time the intended laser position of the ablation pattern was placed or moved, is saved as the "kernel" image to be used to position the laser to the intended laser positions during an experimental run. In embodiments further saved information includes lighting levels, zoom level and/or camera properties used when capturing the image, which will ensure that video conditions can be fully reproduced during a re-centering step.

In embodiments, after a kernel imaged is saved a user continues setup of the remaining experiment **303,** comprising multiple movements and/or initiation of an experimental scan of the placed pattern(s). Once the experimental run is initiated the next step **304** is for software or a user to initiate movement of the sample to a first intended laser position. Upon reaching the open -loop assumed correct position of the intended laser position a snapshot of the field of view of the camera/microscope is taken **305** corresponding to the current position of the sample relative to the camera. An embodiment of this step is illustrated in Fig. 4b showing the kernel image **403,** represented by a dotted outline of crystal grain, corresponding to the intended laser position and a current image **404** of the current field of view of the camera/microscope. As is shown in Fig. 4b the kernel image **403** is not aligned with the current image **404,** represented by a full line outline of the same crystal grain present in the kernel image **403,** due to some positioning repeatability error.

During a comparing step **306** the difference of the intended laser location and the current laser location is determined by comparing the kernel image and the current image of the current field of view of the camera/microscope. If the difference is determined to be within a window of acceptability, the correct motion scheme is complete **310 ;** if the difference is determined to not be within a window of acceptability, a computing step **307** is executed wherein a position error is computed and a set of corrective moves are issued to and executed by the motion control system **104** which moves the sample relative to the camera/microscope and laser. In embodiments this step is done with image recognition algorithms to calculate the difference between the kernel image and the current image of the current field of view of the camera/microscope. In embodiments the window of acceptability may be predefined, computed by software, or set by an operator. In embodiments the corrective move can be a series of moves until the position error is within a window of acceptability.

Once the stage is repositioned due to corrective moves the step of taking a snapshot of the current position **305** is repeated as is the comparing step **306** in which the difference between the original position from the kernel image and a new current position are compared.

Any time in the process when during the comparing step **306** the difference between the kernel image **403** and the current image **404** of the current field of view of the camera/microscope is within the window of acceptability, as is illustrated in Fig. 4c, the corrective motion scheme is complete **310** and the laser is fired at the intended laser position on the crystal grain. This causes a sample of the crystal grain to be suspended in a carrier gas and analyzed in a spectrometry instrument allowing the composition of the crystal grain to be determined for such application as zircon crystal grain dating.

The primary advantage of this invention is to apply a corrective motion scheme to allow for extremely high precision of laser placement greatly improving the specifications of the same open-loop XYZ stage control and motion system, without adding any system level hardware additions/costs.

In embodiments during which an experiment is run, XY motion control system **104** will move the sample slide **105** relative to the camera/microscope **102** and laser **101** to each incrementally setup intended laser location **401** on a zircon crystal grain **202** in a set of zircon crystal grains, then to the reference blank **108,** then back to the next set of zircon crystal grains. In some examples a set of zircon crystal grains could include only 1 grain while in others a set could include 2 or more grains. With each movement either between intended targets on a zircon crystal grains or to the reference blank a bi-directional repeatability error may appear to shift the sample relative to the laser beam **109**position. To correct this bi-directional repeatability error, the corrective motion scheme disclosed above is used to ensure that the laser fires at the intended laser position set during the scan placement process.

The following clauses describe aspects of various examples of methods relating to positioning a laser relative to a crystal grain on a sample.

While the invention has been described by way of example and in terms of the specific embodiments, it is to be understood that the invention is not limited to the disclosed embodiments. The scope of the invention is defined by the appended claims.

## Claims

1. A method for positioning a laser (101) on a crystal grain (202) on a sample on a support surface during a laser ablation procedure comprising:
setting an ablation pattern including multiple intended laser locations for a sample during a scan placement process comprising for each of the multiple intended laser locations:
positioning (302) the sample relative to an intended laser location of said multiple intended laser locations on the sample with a motion control system (104),
saving (302) position coordinates for the intended laser location, and
saving (302) an image (403) taken with a camera for the intended laser location; and
initiating (303) an experiment comprising for each of the multiple intended laser locations:
positioning (304) the laser location relative to the sample to a current position based on the saved coordinates of a chosen one of the multiple intended laser locations with a saved image,
comparing (306) a current image (404) of the current position taken with a camera with the saved image (403) for the chosen intended laser location,
determining (307) a position error based on the comparison,
if the position error is not within a window of acceptability, then applying an offset movement of the laser location relative to the sample with the motion control system (104) based on the position error to correct for the position error and repeat the comparing and determining steps, and
if the position error is within the window of acceptability, then fire a laser beam (109) upon the laser location.

2. The method of claim 1, wherein the motion control system (104) is an open-loop system; and
wherein, in said positioning the laser location relative to the sample to a current position, the current position is an open-loop assumed correct position.

3. The method of claim 1, wherein the camera (102) is fixed relative to the laser (101) location.

4. The method of claim 1, wherein the step of positioning the laser (101) location relative to the sample to a current position occurs after sampling a reference blank (108).

5. The method of claim 1, wherein the step of saving the image (403) for each of said multiple intended laser (101) locations further includes saving at least one of lighting levels, zoom levels, or camera properties used when capturing the image (403).

6. The method of claim 1, including flowing a carrier gas over the sample, wherein said laser beam (109) causes material of the sample to be suspended in the carrier gas, and analyzing the material suspended in the carrier gas.

7. The method of claim 6, wherein the sample comprises zircon.

## Patentansprüche

1. Verfahren zur Positionierung eines Lasers (101) auf einem Kristallkorn (202) auf einem Probenstück auf einer Trägeroberfläche während einer Laserablationsprozedur, wobei das Verfahren folgendes umfasst:
Festlegen eines Ablationsmusters, das mehrere vorgesehene Laserpositionen für ein Probenstück während eines Abtastplatzierungsprozesses aufweist, wobei dies für jede der mehreren vorgesehenen Laserpositionen folgendes umfasst:
Positionieren (302) des Probenstücks im Verhältnis zu einer vorgesehenen Laserposition der mehreren vorgesehenen Laserpositionen auf dem Probenstück mit einem Bewegungssteuerungssystem (104);
Speichern (302) der Positionskoordinaten für die vorgesehene Laserposition; und
Speichern (302) eines mit einer Kamera aufgenommenen Bilds (403) für die vorgesehene Laserposition; und
Einleiten (303) eines Versuches, der für jede der mehreren vorgesehenen Laserpositionen folgendes umfasst:
Positionieren (304) der Laserposition im Verhältnis zu dem Probenstück an einer aktuellen Position auf der Basis der gespeicherten Koordinaten für eine ausgewählte Position der Mehrzahl vorgesehener Laserpositionen mit einem gespeicherten Bild;
Vergleichen (306) eines mit einer Kamera aufgenommenen aktuellen Bilds (404) der aktuellen Position mit dem gespeicherten Bild (403) für die ausgewählte vorgesehene Laserposition;
Bestimmen (307) eines Positionsfehlers anhand des Vergleichs;
wobei, wenn sich der Positionsfehler nicht innerhalb eines zulässigen Bereichs befindet, auf der Basis des Positionsfehlers eine Versatzbewegung der Laserposition im Verhältnis zu dem Probenstück mit dem Bewegungssteuerungssystem (104) angewendet wird, um den Positionsfehler zu korrigieren, und wobei danach die Schritte des Vergleichens und des Bestimmens wiederholt werden; und
wobei, wenn sich der Positionsfehler innerhalb eines zulässigen Bereichs befindet, ein Laserstrahl (109) auf die Laserposition abgefeuert wird.

2. Verfahren nach Anspruch 1, wobei das Bewegungssteuerungssystem (104) ein offenes Regelkreissystem ist, und
wobei sich bei der Positionierung der Laserposition im Verhältnis zu dem Probenstück an einer aktuellen Position die aktuelle Position an einer für einen offenen Regelkreis angenommenen korrekten Position befindet.

3. Verfahren nach Anspruch 1, wobei die Kamera (102) im Verhältnis zu der Position des Lasers (101) feststehend ist.

4. Verfahren nach Anspruch 1, wobei der Schritt des Positionierens der Position des Lasers (101) im Verhältnis zu dem Probenstück an einer aktuellen Position nach dem Abtasten eines Bezugsrohlings (108) erfolgt.

5. Verfahren nach Anspruch 1, wobei der Schritt des Speicherns des Bilds (403) für jede Position der Mehrzahl vorgesehener Positionen des Lasers (101) ferner das Speichern mindestens eines der folgenden umfasst: der Beleuchtungswerte, der Zoomwerte oder der Kameraeigenschaften, die bei der Aufnahme des Bilds (403) verwendet werden.

6. Verfahren nach Anspruch 1, welches das Strömen eines Trägergases über das Probenstück umfasst, wobei der Laserstrahl (109) bewirkt, dass das Material des Probenstücks in dem Trägergas ausgesetzt ist, sowie das Analysieren des in dem Trägergas ausgesetzten Materials.

7. Verfahren nach Anspruch 6, wobei das Probenstück Zirkon umfasst.

## Revendications

1. Procédé de positionnement d'un laser (101) sur un grain cristallin (202) sur un échantillon sur une surface de support pendant une procédure d'ablation par laser comprenant les étapes consistant à :
paramétrer un motif d'ablation comprenant de multiples emplacements de laser prévus pour un échantillon au cours d'un processus de placement par balayage comprenant pour chacun des multiples emplacements de laser prévus les étapes consistant à :
positionner (302) l'échantillon par rapport à un emplacement de laser prévu desdits multiples emplacements de laser prévus sur l'échantillon avec un système de commande de mouvement (104),
enregistrer (302) les coordonnées de position pour l'emplacement de laser prévu, et
enregistrer (302) une image (403) prise avec une caméra pour l'emplacement de laser prévu ; et
lancer (303) une expérience comprenant pour chacun des multiples emplacements de laser prévus les étapes consistant à :
positionner (304) l'emplacement de laser par rapport à l'échantillon sur une position actuelle sur la base des coordonnées enregistrées d'un emplacement de laser choisi parmi les multiples emplacements de laser prévus avec une image enregistrée,
comparer (306) une image actuelle (404) de la position actuelle prise avec une caméra à l'image enregistrée (403) pour l'emplacement de laser prévu choisi,
déterminer (307) une erreur de position sur la base de la comparaison,
si l'erreur de position n'est pas dans une fenêtre d'acceptabilité, appliquer un mouvement de décalage de l'emplacement de laser par rapport à l'échantillon avec le système de commande de mouvement (104) sur la base de l'erreur de position pour corriger l'erreur de position et répéter les étapes de comparaison et de détermination, et
si l'erreur de position est dans la fenêtre d'acceptabilité, lancer un faisceau laser (109) sur l'emplacement de laser.

2. Procédé selon la revendication 1, le système de commande de mouvement (104) étant un système en boucle ouverte ; et
dans ledit positionnement de l'emplacement de laser par rapport à l'échantillon sur une position actuelle, la position actuelle étant une position correcte supposée en boucle ouverte.

3. Procédé selon la revendication 1, la caméra (102) étant fixe par rapport à l'emplacement de laser (101).

4. Procédé selon la revendication 1, l'étape de positionnement de l'emplacement de laser (101) par rapport à l'échantillon sur une position actuelle se produisant après l'échantillonnage d'une ébauche de référence (108).

5. Procédé selon la revendication 1, l'étape d'enregistrement de l'image (403) pour chacun desdits multiples emplacements de laser (101) prévus comprenant en outre l'étape consistant à enregistrer des niveaux d'éclairage, des niveaux de zoom et/ou des propriétés de caméra utilisés pour capturer l'image (403).

6. Procédé selon la revendication 1, comprenant les étapes consistant à écouler un gaz vecteur sur l'échantillon, ledit faisceau laser (109) amenant le matériau de l'échantillon à être en suspension dans le gaz vecteur, et à analyser le matériau en suspension dans le gaz vecteur.

7. Procédé selon la revendication 6, l'échantillon comprenant du zircon.
